# EUROPEAN PATENT SPECIFICATION

(11) **EP 4 175 726 B1**
(45) Date of publication and mention of the grant of the patent: **04.09.2024**
(21) Application number: 20833727.9
(22) Date of filing: 09.12.2020
(51) Int. Cl.: A63B 55/40

(54) **A MULTIPLE SMART SPORTS EQUIPMENT CHARGING SYSTEM**
LADESYSTEM FÜR MEHRERE INTELLIGENTE SPORTAUSRÜSTUNGEN
SYSTÈME DE CHARGE DE MULTIPLES ÉQUIPEMENTS DE SPORT INTELLIGENT

(30) Priority: 06.07.2020 GB 202010333
(43) Date of publication of application: 10.05.2023
(73) Proprietor: Eaton Intelligent Power Limited, Dublin 4 (IE)
(72) Inventor: KELLY, Mark, Dublin, d20 VN81 (IE); ZUCCHETTO, Daniel, Dublin, D04 CH66 (IE); RYAN, Padhraig, Kilkenny, Kilkenny Keatingstown, R95T8K6 (IE)
(74) Representative: Novagraaf Technologies
(86) International application number: PCT/EP2020/085386
(87) International publication number: WO 2022/008090

(56) References cited:
- CN-U- 205 791 631
- TW-U- M 537 922
- US-A1- 2006 138 161
- US-A1- 2019 314 703
- US-B1- 8 581 727
- US-B2- 10 500 452

## Description

### Field of the Invention

The present invention relates to a smart sports equipment charging system and finds particular, although not exclusive, utility in providing a simple and convenient system for charging sports equipment with embedded or otherwise attached electronics.

### Background to the Invention

Typically, athletes that participate in club, bat or racket based sports receive feedback on their performance through coaching or practice, often including video feedback. The athlete may be provided with feedback related to their grip, their swing or another part of their technique or skill. However, as there are many factors affecting shot outcomes and small changes in the athlete's grip or swing technique can have a large impact on the shot outcome, it is difficult for inexperienced athletes and coaches to correctly diagnose and fix technical faults. Furthermore, even elite level athletes and coaches may find it difficult to correctly diagnose and fix technical faults.

Electronic training and feedback devices have been developed to provide accurate and impartial data or feedback to athletes and amateurs. Such devices may include a pressure sensor configured to provide some feedback related to the athlete's grip on their club, bat or racket. There are many devices available to athletes that are embedded in, or are positioned on, their sports equipment. Furthermore, athletes typically have access to other electronic devices that may be embedded in, or positioned on, their sports equipment. For example, golfers may use a smart caddy system and may have sensors on their clubs that are able to track the golfer's shots and record their score.

As wires or cables attached to the sports equipment may hinder the athlete's movement or be otherwise inconvenient, these devices typically include some form of integral power supply, such as a battery or capacitor, so that they do not require an external power source. However, due to the requirements for these devices to be small and lightweight, these integral power sources typically have a small capacity and therefore require charging often. To charge these devices, the athlete must typically connect the device or their sports equipment to a mains power source after they have finished playing or practicing. However, the athlete may forget to charge their device, and the device may not hold enough charge to last the athlete's next session.

Therefore, it is desirable to provide a charging system capable of simply and conveniently charging smart sports equipment. Objects and aspects of the present invention seek to provide such a system.

### Summary of the Invention

According to a first aspect of the present invention, there is provided a smart sports equipment charging system according to claim 1.

A key advantage of the present invention is that smart sports equipment may be charged by storing them in the storage vessel without requiring any further action from the user. Furthermore, several pieces of sports equipment, such as a set of golf clubs, may be charged simultaneously. In addition, a key advantage of the present invention is that the sports equipment may be charged during a game, which may allow for a smaller battery or other power source to be used in the sports equipment.

For example, the storage vessel may be a golf bag and the sports equipment may be golf clubs including a sensor. The golf clubs may be charged between holes or when another club of the set is being used. Furthermore, the golf clubs may be charged whilst waiting for another golfer to play, such as waiting for the group ahead to clear the fairway before teeing off or whilst waiting for a playing partner to play their shot. Accordingly, the battery or other power source in the golf club may need only hold enough charge to power the electronics in or on the golf club for the duration of a few swings, allowing for a smaller, lighter and potentially cheaper power source to be used.

As an alternative example, the storage vessel may be a container for storing any type of sports equipment. The storage vessel may be a user's personal kit bag. Alternatively, the storage vessel may be a shared storage container that may be, for example, located at a sports club.

The sports equipment may be a smart golf club. The smart golf club may be a golf club that includes an electrically powered device, such as a pressure sensor or a GPS device. Accordingly, the storage vessel may be a golf bag configured to store and charge the smart golf club therein. Electronics may be positioned in or on the butt end of the golf club, which is the end opposite the striking head and the end intended to be held during a swing.

Alternatively, the sports equipment may be baseball bat, a tennis racket, a badminton racket, a cricket bat, a hockey stick, a hurley, a lacrosse stick, a table tennis paddle, or any other known sports equipment configured to be held by a user.

A, or each, charging portion may comprise a wireless charging coil. The wireless charging coil may be configured to wirelessly charge sports equipment including a corresponding coil. The corresponding coil may be positioned in or on the sports equipment such that, with the sports equipment stored in the storage vessel, the corresponding coil aligns with the wireless charging coil. For example, the sports equipment may be a golf club, the storage vessel may be a golf bag, the wireless charging coil may be in or on a bottom of the interior of the golf bag, and the corresponding coil may be on a butt end of the golf club. The wireless charging coil may be supplied with electricity and generate an electromagnetic field. A corresponding coil positioned within the electromagnetic field may interact with the electromagnetic field, and a current may be induced in the corresponding coil, which may be used to charge the smart sports equipment.

Any, or each, charging area may comprise an alignment device. The alignment device may be configured to align sports equipment with the respective charging portion. The charging portion may not be able to charge, or may charge inefficiently, if the sports equipment is not correctly aligned. The, or each, alignment device may be configured to urge, ease and/or bias the sports equipment into an aligned position, in which the sports equipment is aligned with the charging area. Accordingly, the alignment device may ensure that the sports equipment and the charging area are correctly aligned.

The, or each, alignment device may comprise a magnetic alignment device. One of the alignment device and the sports equipment may comprise a magnetic portion and the other of the alignment device and the sports equipment may comprise a corresponding magnetic portion. One, or both, of the magnetic portion and the corresponding magnetic portion may comprise a magnet. The other magnetic portion may comprise a magnetic material, such as iron or steel. In this way, the magnetic portions may attract one another and align the sports equipment with the charging area.

The, or each, alignment device may comprise a physical alignment device. The alignment device may comprise a shaped portion configured to engage with the sports equipment and urge the sports equipment into an aligned position, such that the sports equipment may be charged. The shaped portion may include a passage having a diameter, width or cross-sectional area that reduces from a first end of the shaped portion to a second end of the shaped portion. The shaped portion may be arranged such that the first end is positioned further from the charging area than the second end. The shaped portion may be conical, frustoconical or funnel-shaped. Alternatively, the physical alignment device may comprise a slot or passage sized and/or shaped such that the sports equipment may be held within the slot or passage in a single orientation. The single orientation may be an aligned position, such that the sports equipment may be charged.

A, or each, charging portion may comprise a conductive charging contact. The conductive charging contact may be configured to charge sports equipment including a corresponding contact. The conductive charging contact may comprise a plurality of contact points. One of the plurality of contact points may be used for power and another of the plurality of contact points may be used for ground. Alternative uses for each of the plurality of contact points is envisaged. The corresponding contact may be positioned on the sports equipment such that, with the sports equipment stored in the storage vessel, the corresponding contact abuts or otherwise contacts the charging contacts. For example, the sports equipment may be a golf club, the storage vessel may be a golf bag, the charging contact may be on a bottom of the interior of the golf bag, and the corresponding contact may be on a butt end of the golf club.

A separator is configured to separate the internal volume of the storage vessel into more than two sections. A single piece of sports equipment may be stored in each section. Alternatively, a plurality of pieces of sports equipment may be stored in each section. The charging area may include a number of charging portions equal to the number of sections of the internal volume of the storage vessel, as defined by the separator. The separator may be configured to separate the internal volume of the storage vessel into 14 sections. The charging area may include 14 charging portions. In this way, a standard set of 14 golf clubs may be stored and charged. Alternatively, the separator may be configured to separate the internal volume of the storage vessel into 3 or 5 sections. Alternative numbers or sections are envisaged.

A, or each, charging portion may include a controller. Alternatively, a single controller may control all charging portions. The controller may be configured to modulate an amount of power delivered to the respective, or each, charging portion. In this way, the, or each, charging portion may be controlled according to a status of the sports equipment adjacent to the charging portion.

The smart sports equipment charging system may further comprise a processor.

The processor may be operably connected to the charging area. The processor may be configured to detect sports equipment within charging range of a charging portion. The processor may be configured to determine a status of the sports equipment. The processor may be configured to control operation of the charging area according to the status of the sports equipment. The processor may cooperate with the controller in this regard.

The status of the sports equipment includes a charge level of a rechargeable power source of the sports equipment. In this way, only the charging portion, or charging portions, adjacent to sports equipment requiring charging may be powered. Alternatively, or additionally, the status of the sports equipment may include a health of the power source. In this way, a faulty or relatively poorly performing power source may be identified for replacement or otherwise. Alternatively, or additionally, the status of the sports equipment may include a temperature of the power source. In this way, an overheating power source may be identified.

Controlling operation of the charging area may include suppling power to the charging portion adjacent to the sports equipment if a status of the sports equipment includes a charge level below full capacity. Furthermore, controlling operation of the charging area may include supplying no power to the charging portion adjacent to the sports equipment in a status of the sports equipment includes a charge level at full capacity.

The smart sports equipment charging system may further comprise a mains power connector. The mains power connector may be configured to be connectable to a mains power supply. The mains power supply may be a distributed or national grid, or a localised main power source such as a battery bank. The mains power connector may be configured to charge the power storage device.

The power storage device may comprise a battery. Alternatively, or additionally, the power storage device may comprise a capacitor, a super capacitor and/or any other electricity storage device. The power storage device may be arranged within the storage vessel. The power storage device may be removable from the storage vessel for charging, replacement or maintenance. The power storage device may be of the same type or a different type to the power source of the sports equipment. For example, the power source may include a battery and the sports equipment may include a supercapacitor. Alternative arrangements are envisaged.

The, or each, piece of sports equipment configured to be stored and charged inside the storage vessel may include the components and circuitry necessary for the sports equipment to be charged by the charging portion. For example, if the charging portion includes a wireless charging coil, the sports equipment may comprise a corresponding coil.

The charging area is configured to harvest or draw power from the sports equipment. In this way, power may be taken from one piece of sports equipment and used to replenish the power source and/or charge another piece of sports equipment. The charging area may be configured to balance the charge levels of each of the pieces of sports equipment stored within the container. For example, with a set of golf clubs, a golfer will typically use their putter on every hole, whilst they may not use the other clubs as often. Power may be drawn from the lesser used clubs to provide power to the clubs used more often, such as the putter. As a further example, the power source may be depleted or be close to depletion and may not be able to adequately charge a piece of sports equipment. Even with the power source depleted, a piece of sports equipment may be charged by drawings power from another piece of sports equipment.

### Brief Description of the Drawings

Figure 1 is a schematic side cross-sectional view of a golf bag including a smart golf club charging system;
Figure 2 is an enlarged schematic view of a portion of the bottom of the golf bag shown in Figure 1;
Figure 3 is a schematic plan view of the bottom of the interior of the golf bag shown in Figure 1; and
Figure 4 is a partial circuit diagram for the circuitry and components of the golf bag shown in Figure 1.

### Detailed Description

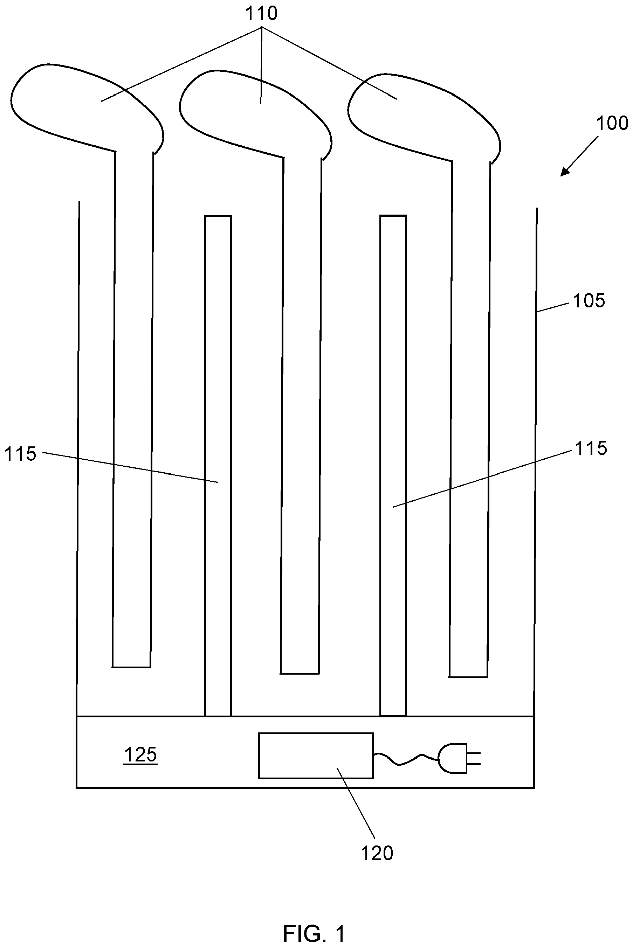

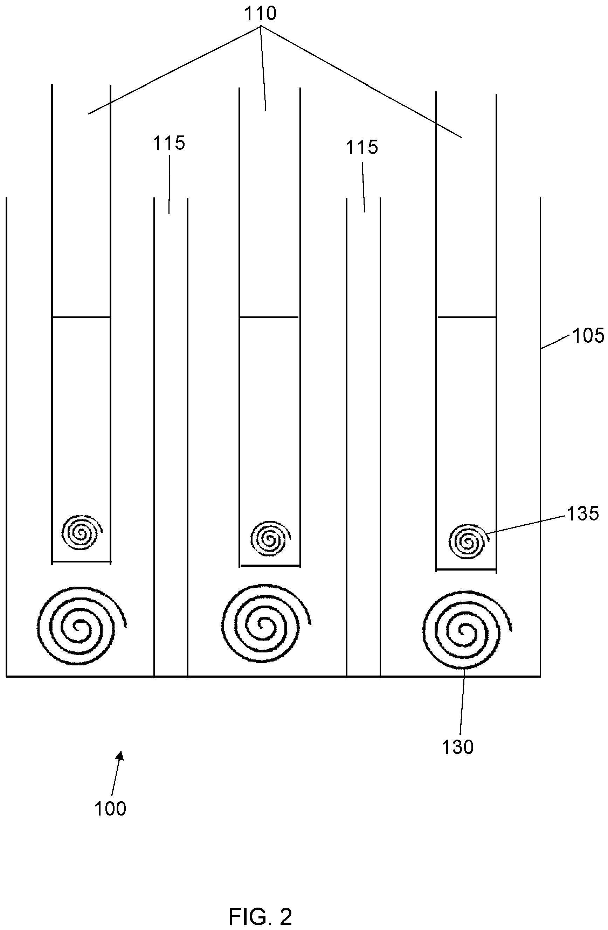

Figure 1 is a schematic side cross-sectional view of a golf bag 100 including a smart golf club charging system. The golf bag 100 includes a substantially cylindrical storage portion 105 for the storage of golf 110 clubs therein. The golf bag 100 includes an internal divider 115 positioned inside the storage portion 105. The internal divider 115 separates the internal volume of the storage portion 105 into several storage portions. A single or several golf clubs 110 may be stored in each storage portion. The golf bag 100 also includes charging circuitry and components 120 to be discussed in more detail with reference to Figures 2 to 4. The charging circuitry and components 120 are positioned in a separate compartment 125 such that the charging circuitry and components 120 are protected from the environment and other damage.

Figure 2 is an enlarged schematic view of a portion of the bottom of the golf bag 100 shown in Figure 1. The charging circuitry and components includes a wireless charging coil 130 positioned in each of the sections of the internal volume of the storage vessel 105, as defined by the internal divider 115, on a bottom surface of the golf bag 100. The butt end of each golf club 110 includes a corresponding charging coil 135 configured to convert an electromagnetic field created by the wireless charging coil 130 into electricity to charge electronics in or on the golf club 110. The internal divider 115 acts as a guide to align the golf clubs 110 with the wireless charging coils 130 such that efficient energy transfer is achieved.

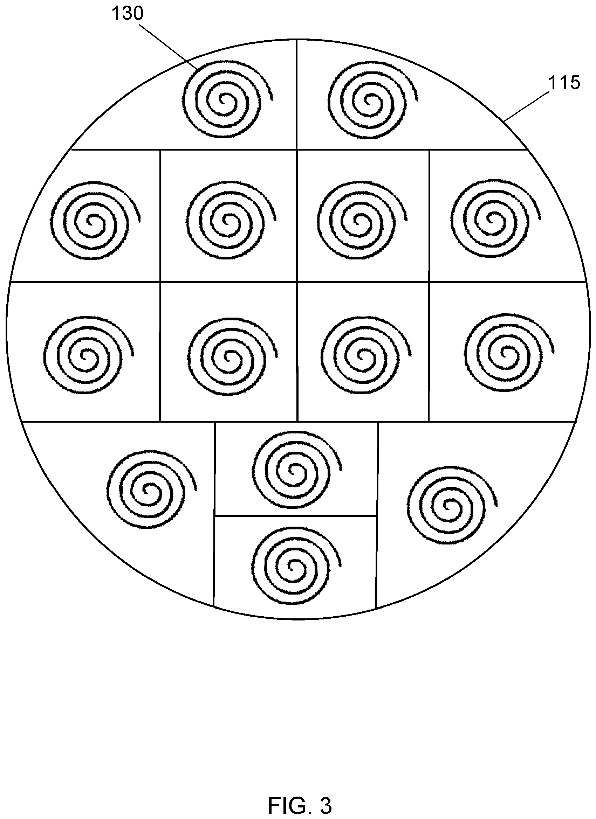

Figure 3 is a schematic plan view of the bottom of the interior of the golf bag 100 shown in Figure 1. The internal divider 115 separates the interior volume of the golf bag into 14 portions. Accordingly, a standard set of 14 golf clubs may be stored in the bag, with one club in each interior portion. Due to the sizing of the golf bag 100 and the internal divider 115, each golf club is held substantially centrally within each interior portion such that the corresponding coil on the butt end of the golf club aligns with the respective wireless charging coil 130 for efficient charging. Furthermore, each golf club stored in the bag 100 has a dedicated wireless charging coil 130 and associated control circuitry such that each golf club may be addressed and charged individually.

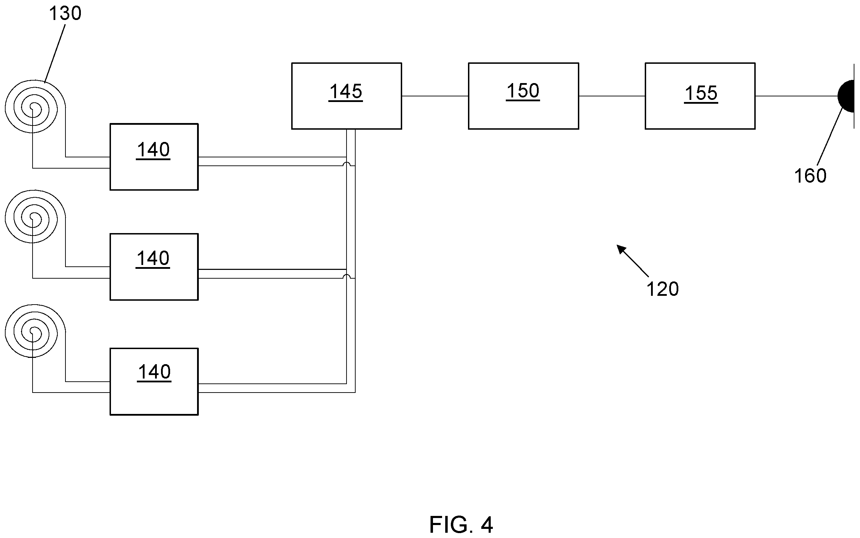

Figure 4 is a partial circuit diagram for the circuitry and components 120 of the golf bag 100 shown in Figure 1. Only three wireless charging coils 130 are shown for clarity. Each wireless charging coil 130 has a dedicated control device 140 configured to control operation of the respective wireless charging coil 130. The circuitry and components 120 also includes a rechargeable battery 145. Each control device 140 is connects the respective wireless charging coil 130 to the battery 145 and controls the power supplied by the battery 145 to the wireless charging coil 130.

The battery 145 is rechargeable and the circuitry and components 120 therefore includes a battery charging circuit 150, a wall plug adapter 155 and a wall plug 160. The wall plug 160 is configured to connect the battery 145, via the battery charging circuit 150 and the wall plug adapter 155, to a mains power source to recharge the battery 145. The battery charging circuit 150 and wall plug adapter 155 are configured to control the charging of the battery 145 with the mains power source, including stepping up or down a voltage such that it is suitable for charging the battery 145.

Although the Figures show a golf bag and a smart golf club charging system, it is to be understood that the present invention may be applicable to other sports equipment and associated storage vessels, such as tennis rackets or hockey sticks, as described herein. Furthermore, although the storage portion is described as substantially cylindrical, it is to be understood that any other shape may be suitable. In Figures 1 and 2, the internal divider is shown to extend the entire length of the storage portion. However, it is to be understood that the internal divider may not extend the entire length of the storage portion, and may only separate a section of the storage portion.

The list of charging circuitry and components given herein is not an exhaustive list and other, or fewer, components may be provided. Although wireless charging coils are shown, alternative charging arrangements may be provided such as conductive contacts as described herein. Furthermore, although the charging circuitry and components are shown to be positioned in a separate compartment, it is to be understood that they may not be provided in a separate compartment and may instead be provided within the storage portion.

The internal divider is shown to separate the interior volume of the golf bag into 14 portions, with 14 wireless charging coils provided, one in each portion. However, an alternative number of wireless charging coils, or other charging arrangements, may be provided. Furthermore, more than one coil, or other arrangement, may be provided in each portion. In addition, although a rechargeable battery is shown, any other electrical storage device may be provided. The invention is defined by the appended claims.

## Claims

1. A smart sports equipment charging system (100) comprising:
a storage vessel (105) for storage of sports equipment, the storage vessel comprising:
an aperture configured to receive sports equipment therethrough for storage of the sports equipment within the storage vessel;
a closed end opposite the aperture; and
a separator (115) configured to separate an internal volume of the storage vessel between the aperture and the closed end into at least two sections;
a charging area (120) arranged at the closed end of the storage vessel, the charging area including at least two charging portions (130), wherein each of the at least two charging portions are aligned with a respective section of the storage vessel such that sports equipment including a rechargeable power source stored within a section of the storage vessel is chargeable with the respective charging portion; and
a power storage device (145) configured to supply power to the charging area, wherein the smart sports equipment charging system further comprises a processor (140) operably connected to the charging area, said processor being configured to:
detect sports equipment within charging range of a charging portion;
determine a status of the sports equipment; said status of the sports equipment including a charge level of a rechargeable power source of the sports equipment and
control operation of the charging area according to the status of the sports equipment,
**characterised in that**,
the control operation of the charging area includes supplying power to a charging portion adjacent to the sports equipment if a status of another sports equipment within the adjacent charging portion includes a charge level below full capacity, and
wherein the control operation of the charging area includes drawing power from the sports equipment and using said power to replenish a rechargeable power source of said another sports equipment.

2. The smart sports equipment charging system of claim 1, wherein the sports equipment is a smart golf club (110) and the storage vessel is a golf bag configured to store and charge the smart golf club therein.

3. The smart sports equipment charging system of claim 1, wherein the charging portions each comprise a wireless charging coil (130) configured to wirelessly charge sports equipment including a corresponding coil.

4. The smart sports equipment charging system of claim 1, wherein each charging area comprises an alignment device configured to align sports equipment with the respective charging portion.

5. The smart sports equipment charging system of claim 4, wherein each alignment device comprises a magnetic alignment device.

6. The smart sports equipment charging system of claim 1, wherein the charging portions each comprise a conductive charging contact configured to charge sports equipment including a corresponding contact.

7. The smart sports equipment charging system of claim 1, wherein the separator is configured to separate the internal volume of the storage vessel into 14 sections, and the charging area includes 14 charging portions.

8. The smart sports equipment charging system of claim 1, wherein each charging portion includes a controller configured to modulate an amount of power delivered to the respective charging portion.

9. The smart sports equipment charging system of claim 1, further comprising a mains power connector (160) configured to be connectable to a mains power supply and charge the power storage device.

10. The smart sports equipment charging system of claim 1, wherein the power storage device comprises a battery (145).

11. The smart sports equipment charging system of claim 1, wherein the power storage device is arranged within the storage vessel.

12. The smart sports equipment charging system of claim 11, wherein the power storage device is removable from the storage vessel for charging, replacement or maintenance.

## Patentansprüche

1. Ladesystem (100) für intelligente Sportausrüstungen, umfassend:
ein Aufbewahrungsbehältnis (105) zur Aufbewahrung von Sportausrüstungen, wobei das Aufbewahrungsbehältnis umfasst:
eine Öffnung, die konfiguriert ist, um durch diese hindurch Sportausrüstungen zur Aufbewahrung der Sportausrüstungen innerhalb des Aufbewahrungsbehältnisses aufzunehmen;
ein geschlossenes Ende gegenüber der Öffnung; und
eine Trenneinrichtung (115) die konfiguriert ist, um ein Innenvolumen des Aufbewahrungsbehältnisses zwischen der Öffnung und dem geschlossenen Ende in mindestens zwei Abschnitte zu unterteilen;
einen Ladebereich (120), der an dem geschlossenen Ende des Aufbewahrungsbehältnisses angeordnet ist, wobei der Ladebereich mindestens zwei Ladeabschnitte (130) umfasst, wobei jeder der mindestens zwei Ladeabschnitte mit einem jeweiligen Teil des Aufbewahrungsbehältnisses ausgerichtet ist, sodass Sportgeräte, die eine wiederaufladbare Stromquelle einschließen, die in einem Teil des Aufbewahrungsbehältnisses aufbewahrt wird, mit dem jeweiligen Ladeabschnitt ladbar sind; und
eine Energiespeichervorrichtung (145) die konfiguriert ist, um den Ladebereich mit Energie zu versorgen,
wobei das Ladesystem für intelligente Sportausrüstungen ferner einen Prozessor (140) einschließt, der betriebsmäßig mit dem Ladebereich verbunden ist, wobei der Prozessor konfiguriert ist zum:
Erkennen von Sportausrüstungen innerhalb des Ladebereichs eines Ladeabschnitts;
Ermitteln eines Status der Sportausrüstungen, wobei der Status der Sportausrüstungen einen Ladestand einer wiederaufladbaren Energiequelle der Sportausrüstungen einschließt, und
Steuern des Ladebereichs gemäß dem Status der Sportausrüstungen,
**dadurch gekennzeichnet, dass**
der Steuerungsbetrieb das Zuführen von Energie zu einem Ladeabschnitt benachbart zu den Sportsausrüstungen einschließt, wenn ein Status einer weiteren Sportausrüstung innerhalb des benachbarten Lagerabschnitts einen Ladestand unterhalb der vollen Kapazität einschließt, und
wobei der Steuerungsbetrieb des Ladebereichs das Entnehmen von Energie aus der Sportausrüstung und das Verwendens der Energie einschließt, um eine wiederaufladbare Energiequelle der weiteren Sportausrüstung wieder aufzufüllen.

2. Ladesystem für intelligente Sportausrüstungen nach Anspruch 1, wobei die intelligente Sportausrüstung ein intelligenter Golfschläger (110) ist und das Aufbewahrungsbehältnis eine Golftasche ist, die zum Aufbewahren und Laden des intelligenten Golfschlägers darin konfiguriert ist.

3. Ladesystem für intelligente Sportausrüstungen nach Anspruch 1, wobei die Ladeabschnitte jeweils eine Drahtlos-Ladespule (130) umfassen, die zum Drahtlos-Laden von Sportausrüstungen konfiguriert ist, die eine entsprechende Spule einschließen.

4. Ladesystem für intelligente Sportausrüstungen nach Anspruch 1, wobei jeder Ladebereich eine Ausrichtungsvorrichtung umfasst, die konfiguriert ist, um Sportausrüstungen mit dem jeweiligen Ladebereich auszurichten.

5. Ladesystem für intelligente Sportausrüstungen nach Anspruch 4, wobei jede Ausrichtungsvorrichtung eine magnetische Ausrichtungsvorrichtung umfasst.

6. Ladesystem für intelligente Sportausrüstungen nach Anspruch 1, wobei die Ladeabschnitte jeweils einen leitfähigen Ladekontakt umfassen, der zum Laden von Sportausrüstungen konfiguriert ist, die einen entsprechenden Kontakt einschließen.

7. Ladesystem für intelligente Sportausrüstungen nach Anspruch 1, wobei die Trendvorrichtung konfiguriert ist, um das Innenvolumen des Aufbewahrungsbehältnisses in 14 Teile zu unterteilen und der Ladebereich 14 Ladeabschnitte umfasst.

8. Ladesystem für intelligente Sportausrüstungen nach Anspruch 1, wobei jeder Ladeabschnitt eine Steuereinheit einschließt, die konfiguriert ist, um eine Energiemenge zu modulieren, die an den jeweiligen Ladeabschnitt abgegeben wird.

9. Ladesystem für intelligente Sportausrüstungen nach Anspruch 1, ferner umfassend einen Netzstromanschluss (160), der konfiguriert ist, um mit einer Netzstromversorgung verbunden zu werden und die Energiespeichervorrichtung zu laden.

10. Ladesystem für intelligente Sportausrüstungen nach Anspruch 1, wobei die Energiespeichervorrichtung eine Batterie (145) umfasst.

11. Ladesystem für intelligente Sportausrüstungen nach Anspruch 1, wobei die Energiespeichervorrichtung innerhalb des Aufbewahrungsbehältnisses angeordnet ist.

12. Ladesystem für intelligente Sportausrüstungen nach Anspruch 11, wobei die Energiespeichervorrichtung zum Laden, zum Austausch oder zur Wartung entnehmbar ist.

## Revendications

1. Système de charge d'équipement de sport intelligent (100) comprenant :
un récipient de stockage (105) pour le stockage d'un équipement de sport, le récipient de stockage comprenant :
une ouverture conçue pour recevoir un équipement de sport passant à travers elle, afin d'être stocké à l'intérieur du récipient de stockage ;
une extrémité fermée en regard de l'ouverture ; et
un séparateur (115) conçu pour séparer un volume interne du récipient de stockage entre l'ouverture et l'extrémité fermée en au moins deux sections ;
une zone de charge (120) disposée à l'extrémité fermée du récipient de stockage, la zone de charge comprenant au moins deux parties de charge (130), dans lequel chacune des au moins deux parties de charge est alignée sur une section respective du récipient de stockage, de telle sorte que l'équipement de sport comprenant une source d'énergie rechargeable stockée dans une section du récipient de stockage puisse être chargé avec la partie de charge respective ; et
un dispositif de stockage d'énergie (145) conçu pour alimenter en énergie la zone de charge,
dans lequel le système de charge d'équipement de sport intelligent comprend en outre un processeur (140) connecté de manière fonctionnelle à la zone de charge, ledit processeur étant configuré pour :
détecter un équipement de sport à portée de charge d'une partie de charge ;
déterminer l'état de l'équipement de sport ; ledit état de l'équipement de sport comprenant un niveau de charge d'une source d'énergie rechargeable de l'équipement de sport et
commander le fonctionnement de la zone de charge en fonction de l'état de l'équipement de sport,
**caractérisé en ce que**
l'opération de commande de la zone de charge comprend l'alimentation en énergie d'une partie de charge adjacente à l'équipement de sport si l'état d'un autre équipement de sport à l'intérieur de la partie de charge adjacente inclut un niveau de charge inférieur à la pleine capacité, et
dans lequel l'opération de commande de la zone de charge comprend l'extraction de l'énergie de l'équipement de sport et l'utilisation de ladite énergie pour reconstituer une source d'énergie rechargeable dudit autre équipement de sport.

2. Système de charge d'équipement de sport intelligent selon la revendication 1, dans lequel l'équipement de sport est un club de golf intelligent (110) et le récipient de stockage est un sac de golf conçu pour stocker et charger le club de golf intelligent en son sein.

3. Système de charge d'équipement de sport intelligent selon la revendication 1, dans lequel les parties de charge comprennent chacune une bobine de charge sans fil (130) conçue pour charger sans fil un équipement de sport comprenant une bobine correspondante.

4. Système de charge d'équipement de sport intelligent selon la revendication 1, dans lequel chaque zone de charge comprend un dispositif d'alignement configuré pour aligner l'équipement de sport sur la partie de charge respective.

5. Système de charge d'équipement de sport intelligent selon la revendication 4, dans lequel chaque dispositif d'alignement comprend un dispositif d'alignement magnétique.

6. Système de charge d'équipement de sport intelligent selon la revendication 1, dans lequel les parties de charge comprennent chacune un contact de charge conducteur conçu pour charger un équipement de sport comprenant un contact correspondant.

7. Système de charge d'équipement de sport intelligent selon la revendication 1, dans lequel le séparateur est conçu pour séparer le volume interne du récipient de stockage en 14 sections, et la zone de charge comprend 14 parties de charge.

8. Système de charge d'équipement de sport intelligent selon la revendication 1, dans lequel chaque partie de charge comprend un organe de commande conçu pour moduler une quantité d'énergie délivrée à la partie de charge respective.

9. Système de charge d'équipement de sport intelligent selon la revendication 1, comprenant en outre un connecteur d'alimentation secteur (160) conçu pour pouvoir être connecté à une alimentation secteur et charger le dispositif de stockage d'énergie.

10. Système de charge d'équipement de sport intelligent selon la revendication 1, dans lequel le dispositif de stockage d'énergie comprend une batterie (145).

11. Système de charge d'équipement de sport intelligent selon la revendication 1, dans lequel le dispositif de stockage d'énergie est disposé à l'intérieur du récipient de stockage.

12. Système de charge d'équipement de sport intelligent selon la revendication 11, dans lequel le dispositif de stockage d'énergie est amovible du récipient de stockage pour la charge, le remplacement ou l'entretien.
